# EUROPEAN PATENT SPECIFICATION

(11) **EP 4 592 097 B1**
(45) Date of publication and mention of the grant of the patent: **07.10.2026**
(21) Application number: 23885300.6
(22) Date of filing: 20.06.2023
(51) Int. Cl.: B60C 11/13, B60C 11/03

(54) **TIRE**
REIFEN
PNEU

(30) Priority: 04.11.2022 JP 2022177681
(43) Date of publication of application: 30.07.2025
(73) Proprietor: BRIDGESTONE CORPORATION, Chuo-ku Tokyo 104-8340 (JP)
(72) Inventor: SONE, Naoyuki, Tokyo 104-8340 (JP); SUGISAWA, Shinya, Tokyo 104-8340 (JP)
(74) Representative: Marks & Clerk LLP
(86) International application number: PCT/JP2023/022784
(87) International publication number: WO 2024/095526

(56) References cited:
- EP-A1- 3 388 255
- WO-A1-2014/084325
- DE-A1- 102011 055 915
- DE-A1- 102020 132 587
- JP-A- 2018 154 148
- JP-A- 2018 176 930
- US-A1- 2015 298 506
- US-A1- 2018 264 891

## Description

### TECHNICAL FIELD

This disclosure relates to a tire.

This application claims priority based on Japanese Patent Application No. 2022-177681, filed in Japan on November 4, 2022.

### BACKGROUND

There have been tires with lug grooves for some time (see, for example, Patent Document 1). A tire with lug grooves is known from US2018264891 A1.

### CITATION LIST

### Patent Literature

PTL 1: JP 2014-227007 A

### SUMMARY

### (Technical Problem)

However, there was room for improvement in terms of wet gripping performance in conventional tires.

An object of the present invention is to provide a tire that can improve wet grip performance.

### (Solution to Problem)

The technical problem is solved by a tire according to claim 1.

Preferred embodiments of the invention are defined in the dependent claims.

### BRIEF DESCRIPTION OF THE DRAWINGS

In the accompanying drawings:
FIG. 1 is a developed view that schematically illustrates a tread surface of a tire according to the first embodiment of the present invention, with the tread surface expanded on a plane;
FIG. 2 is an enlarged view of a part of Figure 1;
FIG. 3 is a drawing that explains an example of the internal structure of a tire that can be applied to a tire according to any embodiments of the present invention, and is a cross-sectional view in tire width direction that schematically illustrates a cross-section of a tire half portion in the tire width direction;
FIG. 4 is a diagram that explains the movement of the tire when it is rolling;
FIG. 5 is a developed view that schematically illustrates a tread surface of a tire according to the second embodiment of the present invention with the tread surface expanded on a plane;
FIG. 6 is an enlarged view of a part of Figure 5;
FIG. 7 is a diagram for explaining the analysis results; and
FIG. 8 is a diagram for explaining the analysis results.

### DETAILED DESCRIPTION

The tire according to the present invention can be used for any type of four-wheeled vehicle tire, and is particularly suitable for use in passenger vehicle tires and light truck (LT) tires. In addition, the tire of the present disclosure can suitably be used for pneumatic tires.

An embodiment of a tire according to the present invention will now be described with reference to the drawings.

The same components and parts are designated by the same reference numerals/symbols in each drawing.

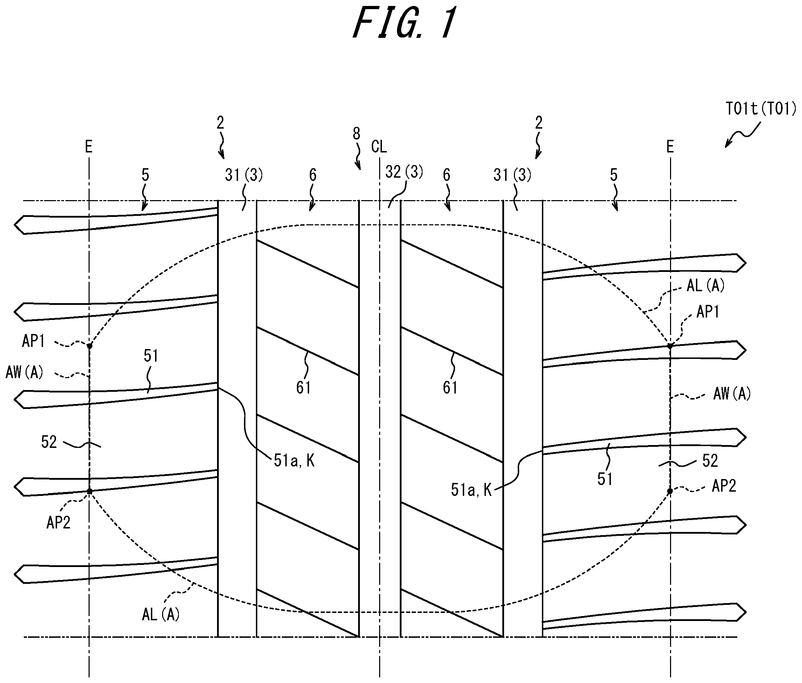

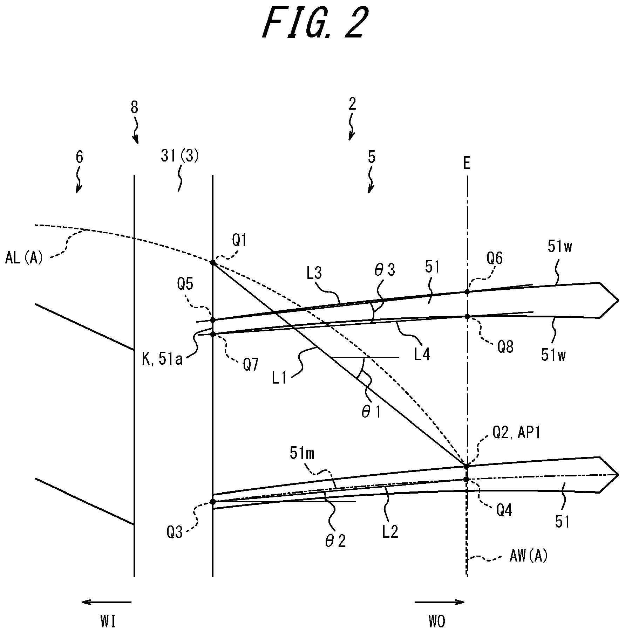

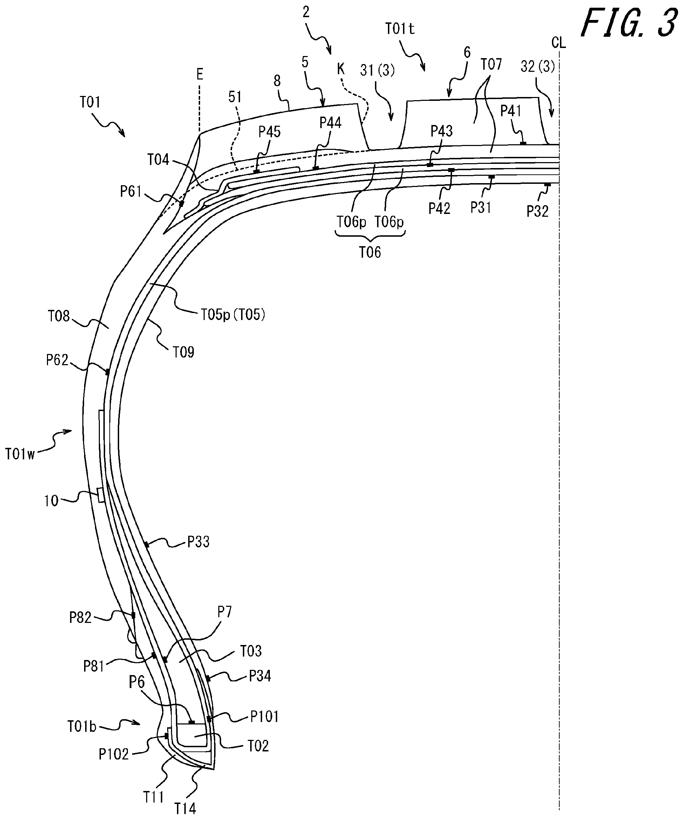

Figure 1 is a developed view that schematically illustrates a tread surface 8 of a tire T01 according to the first embodiment of the present disclosure, with the tread surface 8 expanded on a plane. Figure 2 is an enlarged view of a part of Figure 1. Figure 3 is a drawing that explains an example of the internal structure of a tire that can be applied to the tire T01 according to any embodiments of the present disclosure, and is a cross-sectional view in the tire width direction that schematically illustrates a cross-section of a tire half portion 2 (a part on one side of the tire T01 relative to the tire equatorial plane CL) of the tire T01 in the tire width direction.

The tire T01 in the embodiment of Figure 1 is configured as a passenger vehicle pneumatic tire. However, the tire T01 of each embodiment of the present disclosure can be configured as a tire for any type of four-wheeled vehicle, and can be suitably configured as a passenger vehicle tire or a light truck (LT) tire in particular. In addition, the tire T01 of each embodiment of the present disclosure can be suitably configured as a pneumatic tire.

As illustrated in Figure 3, the tire T01 of each embodiment of the present invention comprises a tread portion T01t, a pair of sidewall portions T01w extending from both ends in the tire width direction of the tread portion T01t to the inner side in the tire radial direction, and a pair of bead portions T01b provided at the end on the inner side in the tire radial direction of each sidewall portion T01w. The bead portion T01b is configured so that when the tire T01 is mounted on a rim, it comes into contact with the rim on the inner side in the tire radial direction thereof and the outer side in the tire width direction thereof.

The outer surface of the tread portion T01t in the tire radial direction forms the tread surface 8. As illustrated in Figure 1, a tread pattern is formed on the tread surface 8.

In this document, the "tread surface 8" means the outer surface around the entire circumference of the tire T01 that is in contact with the road surface when the tire T01 is mounted on a rim that meets WGI measurement conditions, and is driven straight with load and internal pressure under the WGI measurement conditions.

Here, the "WGI measurement conditions" refers to the test conditions for measuring the WGI (Wet Grip Index) as specified in "Supplementary Provision 5: Test procedure for measuring wet grip" of UN-R117-02-S08. The rim, load, and internal pressure under the WGI measurement conditions are described in "4.1.4. Tires and rims" in "Supplementary Provision 5: Test procedure for measuring wet grip" of UN-R117-02-S08.

In this document, the "ground contact edge when moving straight, E", (Figure 1) refers to the edge in the tire width direction of the tread 8 when the tire T01 is mounted on the rim that meets the WGI measurement conditions and is driven straight with load and internal pressure under the WGI measurement conditions.

In addition, in this document, the "outer periphery of the ground contact surface when moving straight, A" (Figure 1) refers to the outer periphery of the ground contact surface (the part of the outer circumference of tire T01 that comes into contact with the road surface) when the tire T01 is mounted on a rim that meets the WGI measurement conditions and is driven straight with load and internal pressure under the WGI measurement conditions. As illustrated in Figure 1, the outer periphery of the ground contact surface when moving straight, A, includes "a pair of ground contact width direction outer edges when moving straight, AW" on both sides in the tire width direction, and "a pair of ground contact lines when moving straight, AL" on both sides in the tire circumferential direction. Each of the pair of ground contact width direction outer edges when moving straight, AW, is a part, of the outer periphery of the ground contact surface when moving straight, A, located on the corresponding ground contact edge when moving straight, E. The ground contact line when moving straight, AL, is a part, of the outer periphery of the ground contact surface when moving straight, A, that connects the outer edges in the ground contact width direction when moving straight, AW, to each other. One ground contact line when moving straight, AL, connects ends AP1 of the pair of the outer edges in the ground contact width direction when moving straight, AW, to each other on one side in the tire circumferential direction. The other ground contact line when moving straight, AL, connects ends AP2 of the pair of the outer edges in the ground contact width direction when moving straight, AW, to each other on the other side in the tire circumferential direction.

Unless otherwise specified, the dimensions and shapes of each element, such as grooves and land portions, shall be measured under reference conditions.

As used herein, the "reference conditions" refer to the condition in which the tire T01 is mounted on an applicable rim, filled with prescribed internal pressure, and unloaded. Here, the dimensions and shapes of the grooves, sipes, land portions, etc. on the tread surface 8 shall be measured on the developed view of tread surface 8.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States. The above-mentioned "applicable rim" includes current sizes as well as future sizes to be listed in the aforementioned industrial standards. An example of the "future sizes to be listed" could be the sizes listed as "FUTURE DEVELOPMENTS" in the ETRTO 2013 edition. For sizes not listed in these industrial standards, the term "applicable rim" refers to a rim with a width corresponding to the bead width of the pneumatic tire.

As used herein, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

Further, as used herein, the "maximum load" refers to the load corresponding to the maximum load capacity.

In this document, the "groove" refers to a groove with a width of 1.0 mm or more at the tread surface 8 under the above reference conditions. The grooves referred to in this document include a circumferential groove 3 and a lug groove 51. The groove width is preferably at least 1.5 mm. The "groove width (width)" is the distance between a pair of opposing groove walls when measured perpendicular to the extending direction of the groove (along the groove width center line), and it may be constant or variable in the tire radial direction. The grooves are suitably configured so that the two opposing groove walls do not come into contact with each other when the tire is mounted on the rim, filled with the prescribed internal pressure, and subjected to the maximum load. The groove depth of the grooves is preferably 3 to 20 mm, and more preferably 3 to 11 mm.

In this document, the "sipe" refers to a sipe having a width of less than 1.0 mm on the tread surface under the above reference conditions. The sipes referred to in this document include a center land portion sipe 61 and a shoulder connecting sipe 53. The sipe width of the center land portion sipe 61 is preferably 0.9 mm or less, and is more preferably 0.7 mm or less. The sipe width of the shoulder connecting sipe 53 is preferably 0.9 mm or less, and the closer it is to 0.9 mm, the better it is in terms of wet performance, and further it is from 0.9 mm on the smaller side, the better it is in terms of land portion rigidity. The "sipe width" is the distance between a pair of opposing sipe walls when measured perpendicular to the extending direction of the sipe. It is preferable that the "sipe" is configured so that the pair of opposing sipe walls are in contact with each other at least in part when the tire is mounted to the rim, filled with the prescribed internal pressure, and subjected to the maximum load. The sipe depth of the sipe is preferably 3 to 20 mm, and more preferably 3 to 11 mm.

For the sake of clarity, in some drawings, the inner side in the tire width direction (the side closer to the tire equatorial plane CL) is indicated by the arrow WI, and the outer side in the tire width direction (the side further from the tire equatorial plane CL) is indicated by the arrow WO.

The following is an explanation on the configuration of the tread portion T01t of the tire T01 of the first embodiment, with reference mainly to Figures 1 and 2.

It will be noted that the tread portion T01t of the tire T01 in this embodiment has basically the same structure in both half portions 2 of the tire on both sides relative to the tire equatorial plane CL. However, the pair of tire half portions may have different structures. In the following explanation, when explaining the configuration of the tire half portion 2, the tread portion T01t of tire T01 may satisfy that configuration in each of the pair of tire half portions 2, or it may satisfy that configuration in only one of the tire half portions 2.

As illustrated in Figure 1, the tread portion T01t is provided with a shoulder circumferential groove 31, which is a circumferential groove 3 extending in the tire circumferential direction in at least one (in this embodiment, both) half potion 2 of the tire; a shoulder land portion 5 partitioned between the shoulder circumferential groove 31 and the ground contact edge when moving straight, E; and a plurality of lug grooves 51 provided in the shoulder land portion 5.

The circumferential groove 31 is located within the tread surface 8 and is positioned on the inner side in the tire width direction than the ground contact edge when moving straight, E.

The plurality of lug grooves 51 are arranged at intervals from one another along the tire circumferential direction. The shoulder blocks 52 are partitioned between the lug grooves 51.

The configuration described in this document with respect to the lug grooves 51 is preferably satisfied by each of the plurality of lug grooves 51, but may be satisfied by only some of the plurality of lug grooves 51.

The lug groove 51 extends substantially along the tire width direction. The lug groove 51 extends from a position on the inner side in the tire width direction of the ground contact edge when moving straight, E, to the outer side in the tire width direction, and opens at the ground contact edge when moving straight, E (i.e., it is located on the ground contact edge when moving straight, E). In this embodiment, the lug groove 51 extends to a position on the outer side in the tire width direction beyond the ground contact edge when moving straight, E. However, the lug groove 51 may terminate on the ground contact edge when moving straight, E.

As illustrated in Figure 2, the groove width of the lug groove 51 does not remain constant, but gradually increases as it extends from the inner end in the tire width direction of the lug groove 51, 51a, to the ground contact edge when moving straight, E (in this embodiment, from the inner end in the tire width direction of the lug groove 51, 51a, to the part located on the outer side in the tire width direction of the ground contact edge when moving straight, E). In this way, the lug groove 51 has a tapered shape that widens towards the outer side in the tire width direction.

It is preferable that the groove width of the lug groove 51 increases smoothly, without increasing in stages, as it extends from the inner end in the tire width direction of the lug groove 51, 51a, to the ground contact edge when moving straight, E (in this embodiment, from the inner end in the tire width direction of the lug groove 51, 51a, to the part located on the outer side in the tire width direction of the ground contact edge when moving straight, E).

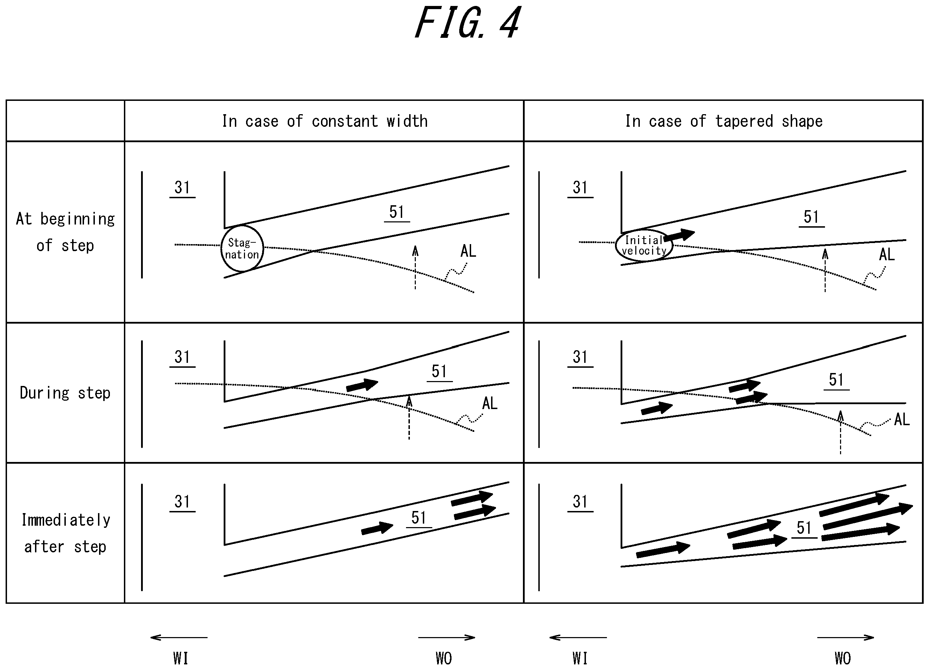

The effect of the tapered shape of the lug groove 51 is explained below, with reference to Figure 4.

The drawing on the left side in Figure 4 illustrates, unlike the present embodiment, the behavior while moving straight when the groove width of the lug groove 51 is constant at least from the inner end in the tire width direction of the lug groove 51, 51a, to the ground contact edge when moving straight, E, in a schematic manner. In this case, when moving straight, at the beginning of the step when the ground contact line when moving straight, AL, begins to hang over the inner part of the lug groove 51 in the tire width direction, the inner part of the lug groove 51 in the tire width direction deforms in such a way that the lug groove 51 is squeezed (the groove width is narrowed), however, because the cross-sectional area of the groove in the relevant portion is large, the flow of water is slow within the relevant portion, and water tends to stagnate. During the subsequent steps, as the part of the lug groove 51 that comes into contact with the road surface gradually widens outwards in the tire width direction, the part that comes into contact with the ground contact line when moving straight, AL, gradually deforms in a way that squeezes out the water towards the outer side in the tire width direction, so that the water flow gradually occurs on the outer side in the tire width direction of the lug groove 51 more than on the inner side of the same in the tire width direction. Furthermore, immediately after the step, the water in the lug groove 51 is discharged to the outer side in the tire width direction than the ground contact edge when moving straight, E.

The drawing on the right side in Figure 4 schematically illustrates the behavior of the lug groove while moving straight, when the lug groove 51 with a constant width illustrated on the left side in Figure 4 is changed to the lug groove 51 with a tapered shape as in this embodiment without changing the area (NEG) or volume (VOL) of the lug groove 51, on the inner side in the tire width direction from the ground contact edge when moving straight, E. The groove width of the tapered lug groove 51 at the inner part in the tire width direction is smaller than the constant width lug groove 51, and the groove width of the tapered lug groove 51 at the outer part in the tire width direction is larger than the constant width lug groove 51. In this case, when moving straight, at the beginning of the step, the inner part of the lug groove 51 in the tire width direction deforms in such a way that the lug groove 51 is squeezed (the groove width is narrowed) as with the constant width lug groove 51, however, since the cross-sectional area of the groove in the relevant portion is small, the speed (initial speed) of the water flowing to the outer side in the tire width direction is easily generated within the inner part in the tire width direction. In addition, during the subsequent steps, the lug groove 51 will deform in the same way as the case of the constant width lug groove 51, but due to the initial velocity generated in the inner part in the tire width direction of the lug groove 51 and the taper shape of the lug groove 51, etc., the flow of water in the lug groove 51 will be greatly promoted compared to the case of the constant width lug groove 51. Furthermore, even immediately after the step, the flow of water in the lug groove 51 increases throughout the entire length of the lug groove 51, and drainage to the outer side in the tire width direction is greatly promoted compared to the case of the constant width lug groove 51.

In this way, according to this embodiment, since the lug groove 51 has a tapered shape, that is, the groove width does not remain constant but gradually increases as it extends from the inner end in the tire width direction of the lug groove 51, 51a, to the ground contact edge when moving straight, E, compared to the constant width lug groove 51, the drainage performance can be improved without changing the area (NEG) or volume (VOL) of the lug groove 51, on the inner side in the tire width direction from the ground contact edge when moving straight, E, and in turn, wet gripping performance can be improved.

If the area (NEG) and volume (VOL) of the lug groove 51 are changed compared to the case of the constant width lug groove 51, there is a risk that various tire performances other than wet gripping performance may also change. However, in this embodiment, by changing only the shape of the lug groove 51 without changing the area (NEG) or volume (VOL) of the lug groove 51, it is possible to improve wet gripping performance while maintaining other tire performance at approximately the same level.

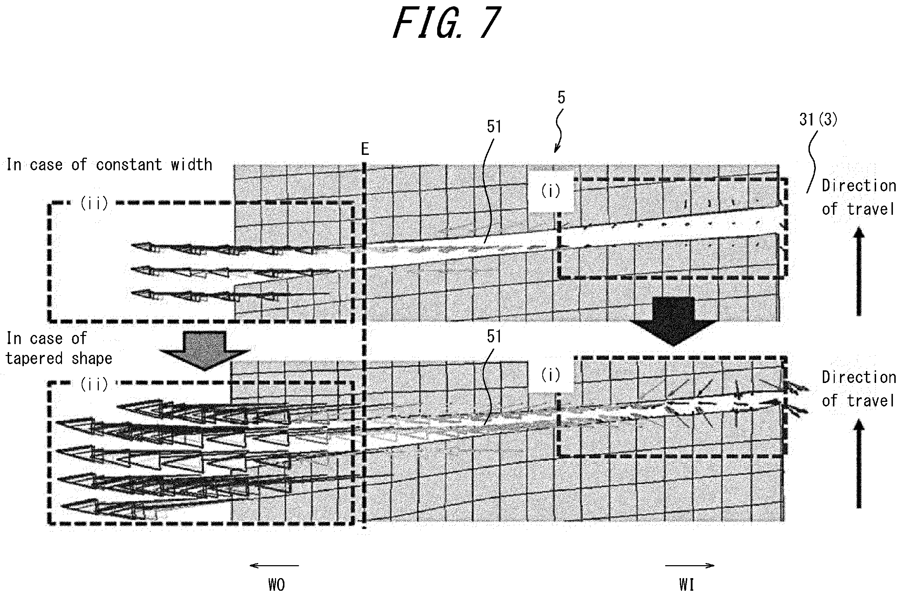

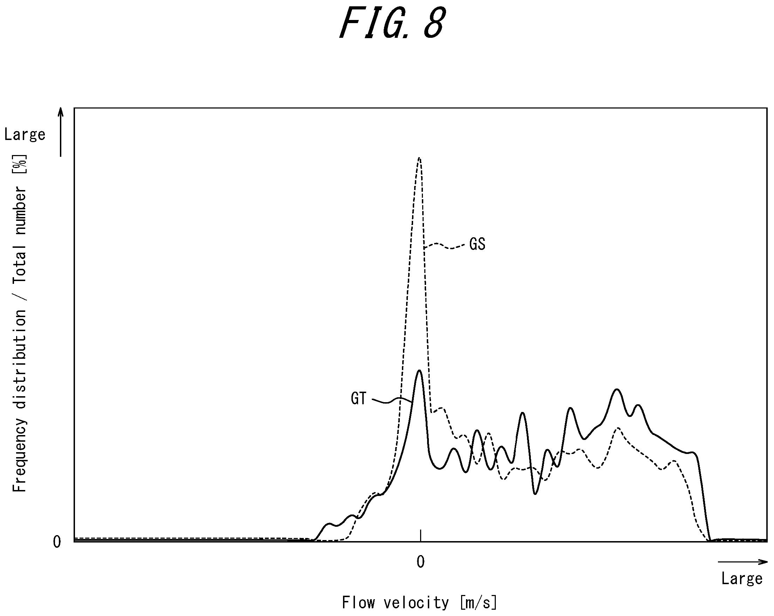

The above-mentioned effects were also confirmed in the analysis, and will now be described. Figures 7 and 8 provide the results of the analysis.

In Figure 7, the upper image provides the analysis results of the behavior immediately after the step when the groove width of the lug groove 51 is constant over the entire length of the lug groove 51. In Figure 7, the lower image provides the analysis results of the behavior immediately after the step when the constant width lug groove 51 in the upper image in Figure 7 is changed to the lug groove 51a with a tapered shape without changing the area (NEG) or volume (VOL) of the lug groove 51 on the inner side in the tire width direction from the ground contact edge when moving straight, E. The arrows in Figure 7 are velocity vectors for water, and the longer the arrow, the faster the flow velocity.

As can be seen in Figure 7, regarding the inner part in the tire width direction of the lug grooves 51, in the case of the constant width lugs 51, almost no water flow occurred and the water remained stagnant, whereas in the case of the tapered lugs 51, the flow to the outer side in the tire width direction was promoted (see (i) in Figure 7). In addition, in the case of the tapered lug groove 51, compared to the case of the constant width lug groove 51, the flow in the lug groove 51 was promoted, resulting in improved drainage from the ground contact edge when moving straight, E, to the outer side in the tire width direction (see (ii) in Figure 7).

Figure 8 provides the distribution of absolute value of the flow velocity component in the analysis results in Figure 7. In Figure 8, waveform GS is the waveform for the case of the constant width lug groove 51, and waveform GT is the waveform for the case of the tapered lug groove 51. As can be seen in Figure 8, in the case of the tapered lug groove 51 (GT), there was less of flow velocity components indicating stagnant (near 0 m/s), compared to the case of the constant width lug groove 51 (GS). In addition, in the case of the tapered lug grooves 51 (GT), there were more flow velocity components higher than 0 m/s than in the case of the constant width lug grooves 51 (GS), and there were more flow velocity components towards the outer side in the tire width direction. In addition, the average value of the flow velocity component was also higher in the case of tapered lug grooves 51 (GT) than in the case of the constant width lug grooves 51 (GS).

As illustrated in Figures 1 and 2, in this embodiment, the lug groove 51 is connected to the shoulder circumferential groove 31. In other words, the inner end in the tire width direction of the lug groove 51, 51a, opens into the shoulder circumferential groove 31. This promotes the flow of water from the shoulder circumferential groove 31 to the lug groove 51 while moving straight, and in turn, promotes the flow of water to the outer side in the tire width direction in the lug groove 51. This further improves drainage performance and, in turn, wet gripping performance.

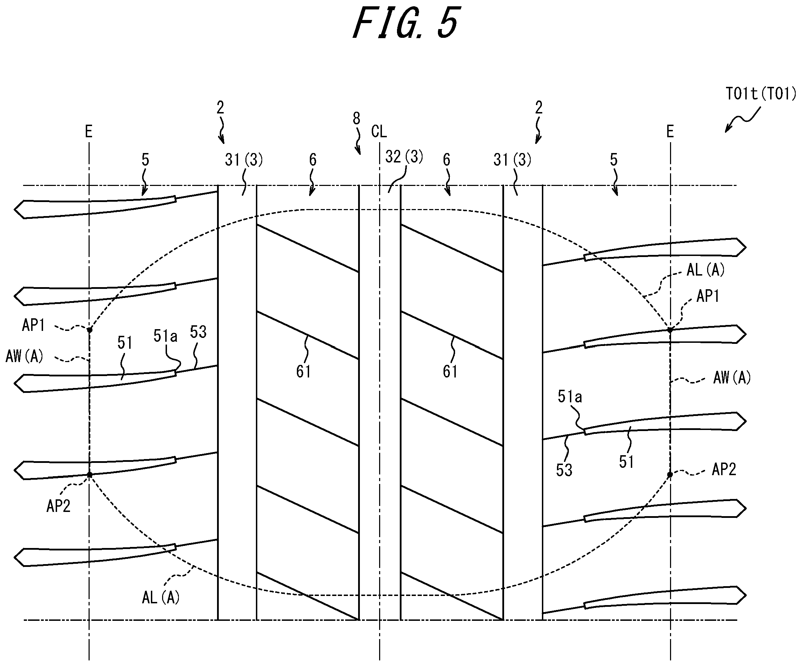

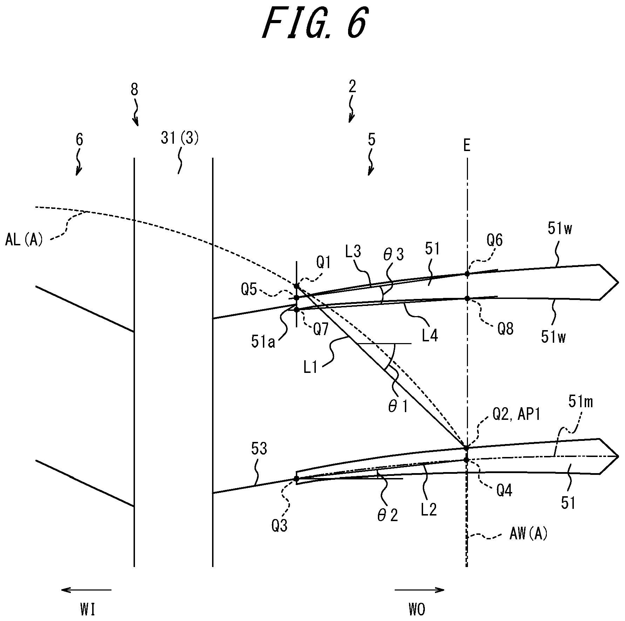

However, as illustrated in the second embodiment in Figures 5 and 6, the lug groove 51 does not have to be connected to the shoulder circumferential groove 31. In the second embodiment, the inner end in the tire width direction of the lug groove 51, 51a, is located on the outer side in the tire width direction of the shoulder circumferential groove 31 within the shoulder land portion 5 (Figure 6). The lug groove 51 and the shoulder circumferential groove 31 are not connected by any grooves.

In this case, as in the second embodiment, the shoulder land portion 5 may be provided with a shoulder connecting sipe 53 that connects the lug groove 51 and the shoulder circumferential groove 31.

Alternatively, the lug groove 51 and the shoulder circumferential groove 31 do not have to be connected by any sipes.

Even when the lug groove 51 is not connected to the shoulder circumferential groove 31, as in the second embodiment, the drainage performance and wet gripping performance can be improved compared to the case of the constant width lug groove 51 due to the tapered shape of the lug groove 51 as described above.

In each example described in this document, as illustrated in Figures 2 and 6, it is preferable that a first inclination angle at an acute side, θ1, relative to a tire width direction, of a first straight line L1, which connects a first point Q1 located on a tire widthwise position of an inner end in the tire width direction of the lug groove 51, 51a, on the ground contact line when moving straight, AL, and a second point Q2 located on the ground contact edge when moving straight, E, on the ground contact line when moving straight, AL, is larger than a second inclination angle at an acute side, θ2, relative to the tire width direction of, a second straight line L2, which connects a third point Q3 located on an inner end in the tire width direction of a groove width center line 51m of the lug groove 51, and a fourth point Q4 located on the ground contact edge when moving straight, E, on the groove width center line 51m of the lug groove 51.

According to this, as schematically illustrated in Figure 4, the ground contact line when moving straight, AL, and hence the ground contact surface, will successively hang over the lug groove 51 from the inner side in the tire width direction to the outer side in the tire width direction. Therefore, while moving straight, the lug groove 51 is more reliably deforms in a way that the lug groove 51 is squeezed (the groove width is narrowed) successively from the inner part in the tire width direction to the outer side in the tire width direction, so that the flow of water to the outer side in the tire width direction in the lug groove 51 is further promoted. In turn, this can further improve drainage performance and wet gripping performance.

The second inclination angle θ2 at the acute side is preferably 3° to 10°, for example.

In each of the examples described in this document, it is preferable that the lug groove 51 is configured so that it does not close, from the inner end in the tire width direction of the lug groove 51, 51a, to the ground contact edge when moving straight, E, within the tread surface 8 when in contact with the ground.

This further promotes the flow of water to the outer side in the tire width direction in the lug groove 51, which in turn further improves drainage performance and wet gripping performance.

In the examples described in this document, it is preferable that, as in the first embodiment illustrated in Figures 1 to 2, when the lug groove 51 is connected to the shoulder circumferential groove 31, the connecting part K (and, by extension, the inner end in the tire width direction of the lug groove 51, 51a) between the lug groove 51 and the shoulder circumferential groove 31 is configured so that it does not close within the tread surface 8 when in contact with the ground.

This further promotes the flow of water from the shoulder circumferential groove 31 to the lug groove 51, which in turn further improves drainage performance and wet gripping performance.

In the examples described in this document, it is preferable that, as in the first embodiment illustrated in Figures 1 to 2, when the lug groove 51 is connected to the shoulder circumferential groove 31, at the connecting part K between the lug groove 51 and the circumferential groove 31, the groove depth of the lug groove 51 is the same as the groove depth of the circumferential groove 31.

This eliminates the step between the lug groove 51 and the shoulder circumferential groove 31, and further promotes the flow of water from the shoulder circumferential groove 31 to the lug groove 51. In addition, this allows, compared to a case where the lug groove has a constant width, the inner end in the tire width direction of the lug groove 51, 51a, to be further prevented from closing when in contact with the ground, without changing the volume of the lug groove 51 on the inner side in the tire width direction from the ground contact edge when moving straight, E, and the flow of water from the shoulder circumferential groove 31 to the lug groove 51 can further be promoted. In turn, this can further improve drainage performance and wet gripping performance.

However, in each example described in this document, when the lug groove 51 is connected to the shoulder circumferential groove 31, the groove depth of the lug groove 51 may be shallower or deeper than the groove depth of the shoulder circumferential groove 31 at the connecting part K between the lug groove 51 and the shoulder circumferential groove 31.

In each of the examples described in this document, it is preferable that the groove width at the ground contact edge when moving straight, E, of the lug groove 51 is at least twice the groove width at the inner end in the tire width direction of the lug groove 51, 51a.

This further promotes the flow of water to the outer side in the tire width direction in the lug groove 51, which in turn further improves drainage performance and wet gripping performance.

In each of the examples described in this document, it is preferable that, as in the respective embodiments illustrated in Figures 1 and 5, a plurality of lug grooves 51 arranged along the tire circumferential direction are not connected each other by any other grooves on the outer side of the shoulder circumferential groove 31 in the tire width direction, on the inner and outer sides (preferably both sides) of the tread surface 8.

This further promotes the flow of water to the outer side in the tire width direction in the lug groove 51, which in turn further improves drainage performance and wet gripping performance.

If the plurality of lug grooves 51 are connected to each other by other grooves, there is a risk that the flow of water in the lug grooves 51 will be disrupted, and the flow of water to the outer side in the tire width direction in the lug grooves 51 may not be promoted.

From the same perspective, in each of the examples described in this specification, it is preferable that, as in the respective embodiments illustrated in Figures 1 and 5, the plurality of lug grooves 51 arranged along the tire circumferential direction are not connected by any sipes, on the inner and outer sides (preferably both sides) of the tread surface 8.

In each of the examples described in this document, as in the respective embodiments illustrated in Figures 1 to 2 and Figures 5 to 6, it is preferable, from the perspective of improving wet gripping performance, that the groove width center line 51m of the lug groove 51 (Figures 2 and 6) has a curved line shape at least from the inner end in the tire width direction of the lug groove 51, 51a, to the ground contact edge when moving straight, E, (in the respective embodiments illustrated in Figures 1 to 2 and Figures 5 to 6, from the inner end in the tire width direction of the lug groove 51, 51a, to the part located on the outer side in the tire width direction of the ground contact edge when moving straight, E).

Alternately, in each of the examples described in this document, although the illustration is omitted, it is also preferable, from the perspective of improving wet gripping performance, that the groove width center line 51m of the lug groove 51 (Figures 2 and 6) has a straight line shape at least from the inner end in the tire width direction of the lug groove 51, 51a, to the ground contact edge when moving straight, E, (in the respective embodiments illustrated in Figures 1 to 2 and Figures 5 to 6, from the inner end in the tire width direction of the lug groove 51, 51a, to the part located on the outer side in the tire width direction of the ground contact edge when moving straight, E).

In each of the examples described in this document, as in the respective embodiments illustrated in Figures 1 to 2 and Figures 5 to 6, it is preferable, from the perspective of improving wet gripping performance, that the inclination angle at the acute side, with respect to the tire width direction, of the groove width center line 51mm of the lug groove 51 (Figure 2, Figure 6) decreases gradually as it moves towards the outer side in the tire width direction at least from the inner end in the tire width direction of the lug groove 51, 51a, to the ground contact edge when moving straight, E, (in the respective embodiments illustrated in Figures 1 to 2 and Figures 5 to 6, from the inner end in the tire width direction of the lug groove 51, 51a, to the part located on the outer side in the tire width direction of the ground contact edge when moving straight, E).

Alternately, in each of the examples described in this document, although the illustration is omitted, it is also preferable, from the perspective of improving wet gripping performance, that the inclination angle at the acute side, with respect to the tire width direction, of the groove width center line 51mm of the lug groove 51 (Figure 2, Figure 6) is constant at least from the inner end in the tire width direction of the lug groove 51, 51a, to the ground contact edge when moving straight, E, (in the respective embodiments illustrated in Figures 1 to 2 and Figures 5 to 6, from the inner end in the tire width direction of the lug groove 51, 51a, to the part located on the outer side in the tire width direction of the ground contact edge when moving straight, E).

It will be noted that the "inclination angle at the acute angle side, with respect to the tire width direction, of the groove width center line 51mm of the lug groove 51" at a certain position in tire width direction refers to the inclination angle at the acute side, with respect to the tire width direction, of a tangent line to the groove width center line 51mm at the certain position in the tire width direction.

In each of the examples described in this document, when the lug groove 51 is connected to the shoulder circumferential groove 31, as in the first embodiment illustrated in Figures 1 to 2, the taper angle θ3 (Figure 2) of the lug groove 51 within the tread surface 8 is preferably 1.0° or more, more preferably 1.3° or more, and even more preferably 1.6° or more. As described above, referring to Figure 4, the tapered shape of the lug groove 51 improves wet gripping performance.

In each of the examples described in this document, when the lug groove 51 is connected to the shoulder circumferential groove 31, as in the first embodiment illustrated in Figures 1 to 2, the taper angle θ3 of the lug groove 51 within the tread surface 8 is preferably 6.5° or less, more preferably 6.2° or less, even more preferably 4.0° or less, and even much more preferably 3.1° or less. When the taper angle θ3 of the lug groove 51 within the tread surface 8 becomes larger, there is a tendency for the connecting part K between the lug groove 51 and the shoulder circumferential groove 31 to become blocked when the tire is in contact with the ground. By setting the angle range as above, when the tire is in contact with the ground, the connecting part K between the lug groove 51 and the circumferential shoulder groove 31 is prevented from becoming blocked, and the flow of water from the circumferential shoulder groove 31 to the lug groove 51 is promoted, which in turn improves wet gripping performance.

It will be noted that the "taper angle θ3 of the lug groove 51 within the tread surface 8" (Figure 2, Figure 6) is the acute angle formed by a third straight line L3 and a fourth straight line L4, when the third straight line L3 is defined as a straight line passing through a fifth point Q5, which is on the inner end in the tire width direction of one groove wall surface 51w of the pair of groove wall surfaces 51w facing each other of the lug groove 51, and a sixth point Q6, which is located at the ground contact edge when moving straight, E, on the one groove wall surface 51w, and the fourth straight line L4 is defined as a straight line passing through a seventh point Q7, which is on the inner end in the tire width direction of the other groove wall surface 51w of the pair of groove wall surfaces 51w facing each other of the lug groove 51, and the eighth point Q8, which is located at the ground contact edge when moving straight, E, on the other groove wall surface 51w.

In each of the examples described in this document, when the lug groove 51 is not connected to the shoulder circumferential groove 31, as in the second embodiment illustrated in Figures 5 to 6, the taper angle θ3 (Figure 6) of the lug groove 51 within the tread surface 8 is preferably 1.0° or more, more preferably 4.2° or more, and even more preferably 5.0° or more. As described above, referring to Figure 4, the tapered shape of the lug groove 51 improves wet gripping performance.

The groove depth of the lug groove 51 within the tread surface 8 is preferably 3 to 20 mm, and is more preferably 4 to 10 mm.

In addition, the groove depth of the lug groove 51 may be constant or variable along the tire width direction.

The groove width of the lug groove 51 at the inner end in the tire width direction of the groove 51, 51a, is preferably 1 to 4 mm, for example, and more preferably 1 to 2 mm is.

The groove width of the lug groove 51 at the ground contact edge when moving straight, E, is preferably 3 to 7 mm, for example, and more preferably 44 to 6 mm.

The groove depth of the shoulder circumferential groove 31 is preferably 3 to 20 mm, and is more preferably 4 to 10 mm.

The groove width of the shoulder circumferential groove 31 is preferably 7 to 16 mm, and is more preferably 9 to 14 mm.

In each example described in this document, the shoulder land portion 5 may be provided with any other configuration in addition to the lug grooves 51 and the shoulder connecting sipes 53.

In each example described in this document, the part of the tread surface 8 that is on the inner side in the tire width direction of the circumferential groove 31 may have any configurations.

In each embodiment illustrated in Figures 1 and 5, a center circumferential groove 32, which is a circumferential groove 3 extending in the tire circumferential direction, is provided in the tread portion T01t of tire T01, on the inner side in the tire width direction of the shoulder circumferential groove 31. The center circumferential groove 32 is located on the tire equatorial plane CL. The center land portion 6 is defined between the center circumferential groove 32 and the shoulder circumferential groove 31. The center land portion 6 is provided with a plurality of center land portion sipes 61 arranged at intervals along the tire circumferential direction. Each center land portion sipe 61 opens into the center circumferential groove 32 and the shoulder circumferential groove 31. Each center land portion sipe 61 is inclined at an acute angle within the tread portion 8 and extends in a straight line. No grooves are provided in the center land portion 6.

However, in each of the examples described in this document, an arbitrary number of circumferential grooves 3 may be provided on the tread surface 8.

In each example described in this document, the tire T01 may have any internal structure. The following is an explanation of an example of the internal structure of the tire T01, with reference to Figure 3. The internal structure of the example in Figure 3 is particularly suitable when applied to passenger vehicle tires.

In the example illustrated in Figure 3, the tire T01 comprises a pair of bead cores T02, a pair of bead fillers T03, a carcass T05, a belt T06, tread rubber T07, side rubber T08, and an inner liner T09.

Each bead core T02 is embedded in the corresponding bead portion T01b. The bead core T02 comprises a plurality of bead wires that are covered with rubber. The bead wires may be made of metal (e.g. steel) or of organic fibers such as polyester, nylon, rayon, or aramid. For example, the bead wires can be formed from monofilaments or twisted wires.

Each bead filler T03 is located on the outer side of the corresponding bead core T02 in the tire radial direction. The bead filler T03 extends in a tapered shape toward the outside in the tire radial direction. The bead filler T03 is made of rubber. In general, bead fillers are sometimes called "stiffeners".

The carcass T05 straddles a pair of bead cores T02 in a toroidal shape. The carcass T05 is composed of one or more (in the example in Figure 1, one) carcass ply T05p. Each carcass ply T05p contains one or more carcass cords and a coating rubber that covers the carcass cords. The carcass cords can be formed from monofilaments or twisted wires.

The carcass cord may be made of metal (e.g. steel) or of organic fibers such as polyester, nylon, rayon, or aramid.

The carcass T05 is preferably of radial structure, but may also be of bias structure.

The belt T06 is arranged on the outer side in the tire radial direction with respect to the crown portion of the carcass T05. The belt T06 has one or more (in the example in Figure 1, two) belt plies T06p. Each belt ply T06p contains one or more belt cords and a coating rubber that covers the belt cords. The belt cords can be formed from monofilaments or twisted wires. The belt cords may be made of metal (e.g. steel) or of organic fibers such as polyester, nylon, rayon, or aramid.

The tread rubber T07 is located on the outer side in the tire radial direction of the belt T06 in the tread portion T01t. The tread rubber T07 constitutes the tread surface 8, which is the outer surface of the tread portion T01t in the tire radial direction. A tread pattern is formed on tread surface 8.

The side rubber T08 is located in the sidewall portion T01w. The side rubber T08 constitutes the outer surface of the sidewall portion T01w on the outer side in the tire width direction. The side rubber T08 is located on the outer side in the tire width direction of the carcass T05. The side rubber T08 is located on the outer side in the tire width direction of the bead filler T03. The side rubber T08 is formed as a single unit with the tread rubber T07.

The inner liner T09 is arranged on the tire inner side of the carcass T05, and may be laminated on the tire inner side of the carcass T05, for example. The inner liner T09, for example, is made of butyl-based rubber, which has low air permeability. The butyl-based rubbers include, for example, butyl rubber and its derivative, halogenated butyl rubber. The inner liner T09 can be made not only of butyl-based rubber, but also of other rubber compositions, resins, or elastomers.

Although the illustration is omitted, the tire T01 may have cushioning rubber between the carcass T05 and the tread rubber T07 in the tire radial direction. The cushioning rubber may be located near an end portion of the belt T06 in the tire width direction.

As illustrated in Figure 3, the tire T01 may be provided with a rubber chaffer T11 in each bead portion, in a portion adapted to contact the rim.

As illustrated in Figure 3, the tire T01 may have one or more (in the example of Figure 3, one) wire chaffers T14 around each bead core T02. The wire chafer T14 may be arranged on the opposite side of the bead core T02 with respect to the carcass T05, as illustrated in the example in Figure 3. The wire chaffer T14 is made of metal (e.g. steel).

Although the illustration is omitted, the tire T01 may have one or more nylon chafers around each bead core T02. The nylon chafer may be arranged on the opposite side of the bead core T02 with respect to the carcass T05, as in the example in Figure 1. The nylon chafer is made of nylon.

Although the illustration is omitted, the tire T01 may have a hat rubber, in each of the tire half portion, between the bead filler T03 and the side rubber T08 in the tire width direction.

As illustrated in Figure 3, the tire T01 may comprise an RF tag 10 as a communication device 100. The RF tag 10 comprises an IC chip and an antenna. For example, the RF tag 10 may be disposed, for example, by being sandwiched between a plurality of members of the same type or different types that make up the tire T01. This makes it easier to attach the RF tag 10 during manufacturing of the tire T01, and improves the productivity of tires T01 comprising the RF tag 10. In the example illustrated in Figure 3, the RF tag 10 may be disposed by being sandwiched between the bead filler T03 and other components adjacent to the bead filler T03. The RF tag 10 may be embedded in any of the components that make up the tire T01. In this way, the load applied to the RF tag 10 can be reduced compared to when it is disposed by being sandwiched between a plurality of components that make up the tire T01. This improves the durability of the RF tag 10. In this example, the RF tag 10 may be embedded in rubber components such as tread rubber T07 and side rubber T08. It is preferable that the RF tag 10 is not disposed at positions, at the boundary between components with different levels of rigidity in the direction of peripheral length, which is the direction along the outer surface of the tire in a cross-sectional view in the tire width direction. In this way, the RF tag 10 is not disposed at positions where strain is likely to be concentrated based on the rigidity gap. As a result, the load applied to the RF tag 10 can be reduced. This improves the durability of the RF tag 10. In this example, it is preferable that the RF tag 10 is not disposed at the boundary between the end portion of the carcass T05 and the components adjacent to this end portion of the carcass T05 (e.g. side rubber T08, etc.) in a cross-sectional view in the tire width direction. The number of RF tags 10 is not particularly limited. The tire T01 may include only one RF tag 10, or may include two or more RF tags 10. Here, the RF tag 10 is described as an example of a communication device, but a communication device other than the RF tag 10 may also be used.

For example, the RF tag 10 can be disposed in the tread portion T01t of the tire T01. In this way, the RF tag 10 will not be damaged by side cuts on the tire T01. For example, the RF tag 10 may be disposed in the center of the tread in the tire width direction. The center of the tread is a position where the deflection is not concentrated in the tread portion T01t. In this way, the load applied to the RF tag 10 can be reduced. This improves the durability of the RF tag 10. In addition, this also prevents the tire from having differences in communication performance of the RF tag 10 from both outer sides in the tire width direction of the tire T01. In this example, the RF tag 10 may be disposed, for example, within a range of 1/2 of the tread width in tire width direction, with the tire equatorial plane as the center CL. For example, the RF tag 10 may be disposed at the tread end portion in the tire width direction. If the position of the reader that communicates with the RF tag 10 is predetermined, the RF tag 10 can be disposed, for example, on the tread end portion on one side close to this reader. In this example, the RF tag may be disposed, for example, within a range of 1/4 of the tread width in the tire width direction, with the tread end as the outer end.

The RF tag 10 may be disposed, for example, closer to the tire cavity than the carcass T05 which includes one or more carcass plies T05p straddling bead portions T01b. In this way, the RF tag 10 becomes less susceptible to damage from external impacts to the tire T01, such as side cuts and nail punctures, etc. As an example, the RF tag 10 may be disposed in close contact with the surface of the carcass T05 on the tire cavity side (Refer to point P31 in Figure 3.). As another example, when there is another component closer to the tire cavity than the carcass T05, the RF tag 10 may be disposed, for example, between the carcass T05 and this other component located closer to the tire cavity than the carcass T05. An example of another component located closer to the tire cavity than the carcass T05 is an inner liner T09 that forms the inner surface of the tire. As another example, the RF tag 10 may be attached to the inner surface of the tire facing the tire cavity (Refer to point P32 in Figure 3.). By having a configuration in which the RF tag 10 is attached to the inner surface of the tire, it is easy to attach the RF tag 10 to the tire T01, and to inspect and replace the RF tag 10. In other words, the ease of attachment and maintenance of the RF tag 10 can be improved. In addition, by attaching the RF tag 10 to the inner surface of the tire, it is possible to prevent the RF tag 10 from becoming the core of tire failures, compared to a configuration in which the RF tag 10 is embedded inside the tire T01.

In addition, when the carcass T05 has a plurality of carcass plies T05t and there is a position where the plurality of carcass plies T05t are overlapped each other, the RF tag 10 may be disposed between the overlapped carcass plies T05t.

For example, the RF tag 10 may be disposed, in the tread portion T01t of the tire T01, on the outer side in the tire radial direction of a belt T06 that includes one or more belt plies T06p. As an example, the RF tag 10 may be disposed on the outer side of the belt T06 in the tire radial direction and in close contact with the same (Refer to point P44 in Figure 3.). As another example, when a belt reinforcement layer T04 is provided, the RF tag 10 may be disposed on the outer side of the belt reinforcement layer T04 in the tire radial direction and in close contact with the same (Refer to point P45 in Figure 3.). As yet another example, the RF tag 10 may be embedded in the tread rubber T07 on the outer side of the belt T06 in the tire radial direction (Refer to point P41 in Figure 3.). By disposing the RF tag 10, in the tread portion T01t of the tire T01, on the outer side of the belt T06 in the tire radial direction, communication with the RF tag 10 from the outer side of the tire T01 in the radial direction is less likely to be disturbed by the belt T06. This improves the communication performance with the RF tag 10 from the outer side of the tire T01 in the tire radial direction.

In addition, the RF tag 10 may be disposed, in the tread portion T01t of the tire T01, on the inner side of the belt T06 in the tire radial direction. In this way, the outer side of the RF tag 10 in the tire radial direction is covered by the belt T06, so the RF tag 10 is less likely to be damaged by impacts from the tread surface or by nails sticking into it. As an example of this, the RF tag 10 may be disposed between the belt T06 and the carcass T05, which is located on the inner side of the belt T06 in the tire radial direction (Refer to point P42 in Figure 3.).

In addition, when the belt T06 comprises a plurality of belt plies T06p, the RF tag 10 may be disposed between any two belt plies T06p in the tread portion T01t of the tire T01. In this way, the outer side of the RF tag 10 in the tire radial direction is covered by one or more belt plies T06p, so the RF tag 10 becomes less likely to be damaged by impacts from the tread surface or by nails sticking into it.

The RF tag may be disposed, for example, between cushion rubber and the tread rubber T07, or between the cushion rubber and the side rubber T08. In this way, the impact on the RF tag 10 can be mitigated by the cushion rubber. This improves the durability of the RF tag.

In addition, the RF tag may be embedded in the cushion rubber, for example. Furthermore, the cushion rubber may be composed of a plurality of rubber members of the same or different types that are adjacent to each other. In such a case, the RF tag 10 may be disposed by being sandwiched between the plurality of rubber components that make up the cushioning rubber.

This configuration is particularly suitable when the tire T01 is a heavy-duty pneumatic tire (e.g., pneumatic tires for trucks and buses, pneumatic tires for off-the-road (construction vehicle) use, etc.).

The RF tag 10 may be disposed, for example, at a position in the sidewall portion T01w or the bead portion T01t of the tire T01. For example, the RF tag 10 may be disposed on the sidewall portion T01w or the bead portion T01b on one side that is close to the reader that can communicate with the RF tag 10 (Refer to point P6, P62 in Figure 3.). In this way, the communication performance between the RF tag 10 and the reader can be improved. As an example, the RF tag 10 can be disposed between the carcass T05 and the side rubber T08, or between the tread rubber T07 and the side rubber T08 (Refer to point P61 in Figure 3.).

For example, the RF tag 10 may be disposed between a position where the tire T01 has a maximum width and a position of the tread surface in the tire radial direction. In this way, compared to a configuration where the RF tag 10 is disposed on the inner side in the tire radial direction of the tire maximum width position, it is possible to improve the communication performance with the RF tag 10 from the outer side of the tire T01 in the tire radial direction.

For example, the RF tag 10 may be disposed on the inner side in the tire radial direction of the tire maximum width position. In this way, the RF tag 10 is disposed near the bead portion T01b where rigidity is high. Therefore, the load applied to the RF tag 10 is reduced, which in turn improves the durability of the RF tag 10. As an example, the RF tag 10 may be disposed at a position adjacent to the bead core T02 in the radial direction or the tire width direction. The area around the bead core T02 is less prone to strain. Therefore, the load applied to the RF tag 10 is reduced, which in turn improves the durability of the RF tag 10.

In particular, it is preferable that the RF tag 10 be disposed on the inner side of the tire maximum width position in the tire radial direction and on the outer side of the bead core T02 in the bead portion T01b in the tire radial direction. In this way, the durability of the RF tag 10 can be improved, while the communication between the RF tag 10 and the reader is less likely to be disturbed by the bead core T02 and the communication performance of the RF tag 10 can be improved.

In addition, when the side rubber T08 is composed of a plurality of rubber components of the same or different types that are adjacent to each other in the tire radial direction, the RF tag 10 may be disposed by being sandwiched between the plurality of rubber components that make up the side rubber T08.

The RF tag 10 may be disposed by being sandwiched between the bead filler T03 and the component adjacent to the bead filler T03. In this way, the RF tag 10 can be disposed in a position where the strain is less likely to be concentrated due to the arrangement of the bead filler T03. Therefore, the load applied to the RF tag 10 is reduced, which in turn improves the durability of the RF tag 10.

The RF tag 10 may be disposed, for example, by being sandwiched between the bead filler T03 and the carcass T05. The part of the carcass T05, that sandwiches the RF tag 10 in place together with the bead filler T03, may be located on the outer side in the tire width direction with respect to the bead filler T03, or it may be located on the inner side in the tire width direction with respect to the bead filler T03. When the part of the carcass T05 that sandwiches the RF tag 10 in place together with the bead filler T03 is located on the outer side in the tire width direction of the bead filler T03, the load applied to the RF tag 10 caused by impact or damage to the tire from the outside of the tire T01 in the tire width direction can be reduced even more. This makes it possible to further improve the durability of the RF tag 10.

In addition, the bead filler T03 may have a portion that is arranged adjacent to the side rubber T08. In such a case, the RF tag 10 may be disposed by being sandwiched between the bead filler T03 and the side rubber T08.

Furthermore, the bead filler T03 may also have a portion that is arranged adjacent to a rubber chaffer T11. In such a case, the RF tag 10 may be disposed by being sandwiched between the bead filler T03 and the rubber chaffer T11.

This configuration is particularly suitable when the tire T01 is a passenger vehicle pneumatic tire.

The RF tag may be disposed between a stiffener T03 and the component adjacent to the stiffener T03. In this way, the RF tag 10 can be disposed in a position where the distortion is less likely to be concentrated due to the placement of the stiffener T03. Therefore, the load applied to the RF tag 10 is reduced, which in turn improves the durability of the RF tag 10. For example, the RF tag 10 may be disposed by being sandwiched between the stiffener T03 and the side rubber T08.

Alternatively, the RF tag 10 may be disposed by being sandwiched between the stiffener T03 and the carcass T05. The part of the carcass T05, that sandwiches the RF tag 10 in place together with the stiffener T03, may be located on the outer side in the tire width direction with respect to the stiffener T03, or it may be located on the inner side in the tire width direction with respect to the stiffener T03. When the part of the carcass T05, that sandwiches the RF tag 10 in place together with the stiffener T03, is located on the outer side in the tire width direction with respect to the stiffener T03, the load applied to the RF tag 10 caused by impact or damage to the tire T01 from the outside side of the tire T01 in the tire width direction can be reduced even more. This makes it possible to further improve the durability of the RF tag 10.

The stiffener T03 may also comprise a part that is arranged adjacent to a rubber chaffer T11. In such cases, the RF tag 10 may be disposed by being sandwiched between the stiffener T03 and the rubber chaffer T11.

The stiffener T03 may comprise a part that is adjacent to a hat rubber on the outer side in the tire width direction. In this case, the RF tag 10 may be disposed by being sandwiched between the stiffener T03 and the hat rubber.

The stiffener T03 may be composed of a plurality of rubber components of different hardness. In such a case, the RF tag 10 may be disposed by being sandwiched between the plurality of rubber components that make up the stiffener T03.

The RF tag 10 may be disposed by being sandwiched between the hat rubber and the component adjacent to the hat rubber. For example, the RF tag 10 may be disposed by being sandwiched between the hat rubber and the carcass ply T05p. In this way, the impact on the RF tag 10 can be mitigated by the hat rubber, and this improves the durability of the RF tag 10.

This configuration is particularly suitable when the tire T01 is a heavy-duty pneumatic tire (e.g., pneumatic tires for trucks and buses, pneumatic tires for off-the-road (construction vehicle) use, etc.).

The RF tag 10 may be disposed, for example, between the rubber chaffer T11 and the side rubber T08 (Refer to point P82 in Figure 3.). In this way, the RF tag 10 can be disposed in a position where the distortion is less likely to be concentrated due to the disposition of the rubber chaffer T11. This reduces the load applied to the RF tag 10, and improves the durability of the RF tag 10.

The RF tag 10 may be disposed, for example, by being sandwiched between the rubber chafer T11 and the carcass T05 (Refer to point P81 in Figure 3.). In this way, the load applied to the RF tag 10 due to impact or damage from the rim can be reduced. This improves the durability of the RF tag 10.

The RF tag 10 may be disposed by being sandwiched between a nylon chafer and another component that is adjacent to the outer side or inner side of the nylon chafer in the tire width direction. In this way, the position of the RF tag 10 is less likely to change when the tire deforms. This reduces the load applied to the RF tag 10 when the tire deforms, and this improves the durability of the RF tag 10.

For example, the nylon chafer may comprise a part that is adjacent to the rubber chafer T11 on the outer side in the tire width direction. In such a case, the RF tag 10 may be disposed by being sandwiched between the nylon chafer and the rubber chafer T11. For example, the nylon chafer may comprise a part that is adjacent to the side rubber T08 on the outer side in the tire width direction. In such a case, the RF tag 10 may be disposed by being sandwiched between the nylon chafer and the side rubber T08.

For example, the nylon chafer may have a part adjacent to the stiffener T03 on the inner side in the tire width direction. In such a case, the RF tag 10 may be disposed by being sandwiched between the nylon chafer and the stiffener T03. In addition, the nylon chafer may comprise a part that is adjacent to a hat rubber T12 on the inner side in the tire width direction, for example. In such cases, the RF tag 10 may be disposed by being sandwiched between the nylon chafer and the hat rubber T12. Furthermore, the nylon chafer may comprise a part that is adjacent to the carcass T05 on the inner side in the tire width direction. In such cases, the RF tag 10 may be disposed by being sandwiched between the nylon chafer and the carcass T05. Furthermore, the nylon chafer may comprise a part that is adjacent to a wire chafer T14 on the inner side in the tire width direction. In such cases, the RF tag 10 may be disposed by being sandwiched between the nylon chafer and the wire chafer T14.

In this way, the RF tag 10 may be disposed by being sandwiched between the nylon chafer and another component that is adjacent to this nylon chafer on the outer side or inner side in the tire width direction. In particular, when the outer side of the RF tag 10 in the tire width direction is covered with a nylon chafer, the load applied to the RF tag 10 due to impact or damage from the outside of the tire in the tire width direction can be reduced even more. This makes it possible to further improve the durability of the RF tag 10.

This configuration is particularly suitable when the tire T01 is a heavy-duty pneumatic tire (e.g., pneumatic tires for trucks and buses, pneumatic tires for off-the-road (construction vehicle) use, etc.).

The RF tag 10 may be disposed by being sandwiched between the wire chafer T14 and another component that is adjacent to this wire chafer T14 on the inner side or outer side in the tire width direction. In this way, the position of the RF tag 10 is less likely to change when the tire deforms. This reduces the load applied to the RF tag 10 when the tire deforms. This improves the durability of the RF tag 10. The another component that is adjacent to the wire chaffer T14 on the inner side or outer side in the tire width direction may be a rubber member, such as a rubber chaffer T14 (Refer to point P102 in Figure 3.). This another component that is adjacent to the wire chaffer T14 on the inner side or outer side in the tire width direction may be a carcass T05 (Refer to point P101 in Figure 3.).

A belt reinforcement layer T04 may be provided on the outer side of the belt T06 in the tire radial direction. For example, the belt reinforcement layer T04 may be formed of a cord made of polyethylene terephthalate that is spirally wound continuously in the tire circumferential direction. The code of the belt reinforcement layer T04 is made by applying adhesive treatment under a tension of 6.9×10⁻² N/tex or more, and the elastic modulus at a load of 29.4 N measured at 160°C may be 2.5 mN/dtex*% or more. Furthermore, the belt reinforcement layer T04 may be disposed to cover the entire belt T06, or it may be disposed to cover only the two ends of the belt T06. Moreover, the winding density per unit width of the belt reinforcement layer T04 may vary depending on the position in the width direction. In this way, it is possible to reduce road noise and flat spots without reducing high-speed durability.

This configuration is particularly suitable when the tire T01 is a passenger vehicle pneumatic tire.

### EXAMPLES

Tires T01 according to Examples and Comparative Examples were prepared and evaluated, and will be described below.

### [Comparative Example 1, Examples 1 and 2; Comparative Example 2, Examples 3 and 4]

The tires for Comparative Example 1, Examples 1 and 2, and Comparative Examples 2, Examples 3 and 4 were prepared by adjusting the shape of each lug groove 51 by grooving on tires of same tread pattern and of tire size 205/55R16. The tread patterns of each example were basically the same as the one illustrated in Figure 1, with only the shape of each lug groove 51 being different. The details of the configuration of the lug groove 51 in each example are provided in Table 1.

In each Example, each lug groove 51 was open at the ground contact edge when moving straight, E, and the first inclination angle at the acute side, θ1, was larger than the second inclination angle at the acute side, θ2, and the groove width of each lug groove 51 gradually increases, without remaining constant, as it extends to the outer side in the tire width direction, from at least the inner end in the tire width direction of the lug groove 51, 51a, to the ground contact edge when moving straight, E.

In each Comparative example, the groove width of each lug groove 51 was constant from at least the inner end in the tire width direction of the lug groove 51, 51a, to the ground contact edge when moving straight, E.

In Examples 1 and 2, the area (NEG) and volume (VOL) of each lug grooves 51 on the inner side in the tire width direction than the ground contact edge when moving straight, E, respectively were the same as those of each lug groove 51 in Comparative Example 1. In Examples 3 and 4, the area (NEG) and volume (VOL) of each lug grooves 51 on the inner side in the tire width direction than the ground contact edge when moving straight, E, respectively were the same as those of each lug groove 51 in Comparative Example 2.

The WGI (Wet Grip Index) was measured for each example tire. The results are provided in Table 1. In Table 1, the WGI values for Examples 1 and 2 are expressed as index values when the WGI value for Comparative Example 1 is set to 100, and the WGI values for Examples 3 and 4 are expressed as index values when the WGI value for Comparative Example 2 is set to 100. The WGI index values provided in Table 1 indicate that the higher the value, the higher the WGI and, in turn, the higher the wet gripping performance. The WGI was measured in accordance with the "Supplementary Provision 5: Test Procedure for Measuring Wet Grip" of UN-R117-02-S08.

**[Table 1]**

| | Comparative Example 1 | Example 1 | Example 2 | Comparative Example 2 | Example 3 | Example 4 |
|---|---|---|---|---|---|---|
| | Area (NEG) and volume (VOL) of lug grooves 51 on inner side in tire width direction than ground contact edge when moving straight, E, are the same. | | | Area (NEG) and volume (VOL) of lug grooves 51 on inner side in tire width direction than ground contact edge when moving straight, E, are the same. | | |
| Shape of lug groove 51 | Constant width | Tapered shape | Tapered shape | Constant width | Tapered shape | Tapered shape |
| Taper angle *θ* 3 of lug groove 51 (° ) | 0.0 | 1.5 | 3.1 | 0.0 | 3.1 | 6.2 |
| Groove width at inner end in tire width direction of lug groove 51 (mm) | 2.0 | 1.5 | 1.0 | 3.0 | 2.0 | 1.0 |
| Groove width at ground contact edge when moving straight, E, of lug groove 51 (mm) | 2.0 | 2.5 | 3.0 | 3.0 | 4.0 | 5.0 |
| Whether lug groove 51 is connected to shoulder circumferential groove 31 | Connected | Connected | Connected | Connected | Connected | Connected |
| WGI | 100.0 | 102.3 | 101.6 | 100.0 | 101.8 | 100.8 |

As can be seen from Table 1, the tires in each Example had higher WGI values than the tires in the corresponding Comparative Examples, and consequently had higher wet gripping performance.

### [Comparative Example 3, Example 5; Comparative Example 4, Example 6; Comparative Example 5, Example 7]

The tires for Comparative Example 3, Example 5, and Comparative Example 4, Example 6 were prepared by adjusting the shape of each lug groove 51 by grooving on tires of the same size and the same tread pattern. The tread patterns of Comparative Example 3 and Example 5 were basically the same as the one illustrated in Figure 1, with only the shape of each lug groove 51 being different. The tread patterns of Comparative Example 4 and Example 6 were basically the same as the one illustrated in Figure 5, with only the shape of each lug groove 51 being different.

The tires in Comparative Example 5 and Example 7 were each made using a mold, and with a tire size of 205/55R16. The tread patterns of Comparative Example 5 and Example 7 were basically the same as the one illustrated in Figure 5, with only the shape of each lug groove 51 being different.

The details of the configuration of the lug groove 51 in each example are provided in Table 2.

In each Example, each lug groove 51 was open at the ground contact edge when moving straight, E, and the first inclination angle at the acute side, θ1, was larger than the second inclination angle at the acute side, θ2, and the groove width of each lug groove 51 gradually increased, without remaining constant, as it extended to the outer side in the tire width direction, from at least the inner end in the tire width direction of the lug groove 51, 51a, to the ground contact edge when moving straight, E.

In each Comparative example, the groove width of each lug groove 51 was constant from at least the inner end in the tire width direction of the lug groove 51, 51a, to the ground contact edge when moving straight, E.

In Example 5, the area (NEG) and volume (VOL) of each lug grooves 51 arranged on the inner side in the tire width direction from the ground contact edge when moving straight, E, were the same as those of each lug groove 51 in Comparative Example 3. In Example 6, the area (NEG) and volume (VOL) of each lug grooves 51 arranged on the inner side in the tire width direction from the ground contact edge when moving straight, E, were the same as those of each lug groove 51 in Comparative Example 4. In Example 7, the area (NEG) and volume (VOL) of each lug grooves 51 arranged on the inner side in the tire width direction from the ground contact edge when moving straight, E, were the same as those of each lug groove 51 in Comparative Example 5.

The WGI (Wet Grip Index) was measured for each example tire. The results are provided in Table 2. In Table 2, the WGI value for Example 5 is expressed as an index value when the WGI value for Comparative Example 3 is set to 100; the WGI value for Example 6 is expressed as an index value when the WGI value for Comparative Example 4 is set to 100; and the WGI value for Example 7 is expressed as an index value when the WGI value for Comparative Example 5 is set to 100. The WGI index values provided in Table 2 indicate that the higher the value, the higher the WGI and, in turn, the higher the wet gripping performance. The WGI was measured in accordance with the "Supplementary Provision 5: Test Procedure for Measuring Wet Grip" of UN-R117-02-S08.

**[Table 2]**

| | Comparative Example 3 | Example 5 | Comparative Example 4 | Example 6 | Comparative Example 5 | Example 7 |
|---|---|---|---|---|---|---|
| | Area (NEG) and volume (VOL) of lug grooves 51 on inner side in tire width direction than ground contact edge when moving straight. E, are the same | | Area (NEG) and volume (VOL) of lug grooves 51 on inner side in tire width direction than ground contact edge when moving straight, E, are the same | | Area (NEG) and volume (VOL) of lug grooves 51 on inner side in tire width direction than ground contact edge when moving straight, E, are the same | |
| Shape of lug groove 51 | Constant width | Tapered shape | Constant width | Tapered shape | Constant width | Tapered shape |
| Taper angle *θ* 3 of lug groove 51 (° ) | 0.0 | 3.1 | 0.0 | 4.2 | 0.0 | 5.0 |
| Groove width at inner end in tire width direction of lug groove 51 (mm) | 3.0 | 2.0 | 3.0 | 2.0 | 2.9 | 1.7 |
| Groove width at ground contact edge when moving straight, E, of lug groove 51 (mm) | 3.0 | 4.0 | 3.0 | 4.0 | 2.9 | 4.1 |
| Whether lug groove 51 is connected to shoulder circumferential groove 31 | Connected | Connected | Not cconnected | Not cconnected | Not cconnected | Not cconnected |
| WGI | 100.0 | 103.3 | 100.0 | 101.6 | 100.0 | 101.0 |

As can be seen from Table 2, the tires in each Example had higher WGI values than the tires in the corresponding Comparative Example, and consequently had higher wet gripping performance.

In addition, the tires in Comparative Example 5 and Example 7 were also evaluated for various other tire performances (steering stability performance, noise resistance performance, uneven wear resistance performance, wet performance other than wet gripping performance (hydroplaning resistance performance, etc.)). As a result, it was confirmed that the tire in Example 7 had almost the same performance as the tire in Comparative Example 5 in terms of these tire performance, and that it had higher performance, especially in some wet performance (such as hydroplaning resistance performance) than the tire in Comparative Example 5.

### INDUSTRIAL APPLICABILITY

The tire of the present invention can be used for any type of four-wheeled vehicle tire, and is particularly suitable for use in passenger vehicle tires and light truck (LT) tires. In addition, the tire of the present invention can be used as pneumatic tire.

### REFERENCE SIGNS LIST

- T01: Tire
- 2: Tire half portion
- 3: Circumferential groove (groove)
- 31: Shoulder circumferential groove
- 32: Center circumferential groove
- 5: Shoulder land portion
- 51: Lug groove (groove),
- 51a: Inner end in the tire width direction
- 51m: Center line of groove width
- 51w: Groove wall surface
- 52: Shoulder block
- 53: Shoulder connecting sipe (sipe)
- 6: Center land portion
- 61: Center land portion sipe (sipe)
- 8: Tread surface
- K: Connecting part between lug groove and circumferential groove
- E: Ground contact edge when moving straight
- A: Outer periphery of ground contact surface when moving straight
- AW: Ground contact width direction outer edge when moving straight
- AP1: One end in the tire circumferential direction of ground contact width direction outer edge when moving straight
- AP2: The other end in the tire circumferential direction of ground contact width direction outer edge when moving straight
- AL: Ground contact line when moving straight
- Q1: First point
- Q2: Second point
- Q3: Third point
- Q4: Fourth point
- L1: First straight line
- L2: Second straight line
- θ1: First inclination angle
- θ2: Second inclination angle
- WI: Inner side in tire width direction
- WO: Outer side in tire width direction
- T01t: Tread portion
- T01w: Sidewall portion
- T01b: Bead portion
- T02: Bead core
- T03: Bead filler
- T04: Belt reinforcement layer
- T05: Carcass
- T05p: Carcass ply
- T06: Belt
- T06p: Belt ply
- T07: Tread rubber
- T08: Side rubber
- T09: Inner liner
- T11: Rubber chaffer
- T14: Wire chaffer
- CL: Tire equatorial plane
- 10: RF tag

## Claims

1. A tire (T01), wherein
a tread portion (T01t) is provided with, on at least a half portion of the tire (T01) on one side relative to a tire equatorial plane (CL):
a circumferential groove (31);
a shoulder land portion (5) partitioned between the circumferential groove (31) and a ground contact edge when moving straight (E); and
a lug groove (51) provided on the shoulder land portion (5),
the lug groove (51) is open at the ground contact edge when moving straight (E),
a first inclination angle at an acute side, θ1, relative to a tire width direction, of a first straight line L1, which connects a first point Q1 located at the same tire widthwise position as an inner end in the tire width direction of the lug groove (51) and on a ground contact line when moving straight (AL) and a second point Q2 located on the ground contact edge when moving straight (E) and on the ground contact line when moving straight (AL), is larger than a second inclination angle at an acute side, θ2, relative to the tire width direction of, a second straight line L2, which connects a third point Q3 located on an inner end in the tire width direction of a groove width center line (51m) of the lug groove (51) and a fourth point Q4 located on the ground contact edge when moving straight (E) and on the groove width center line (51m) of the lug groove (51),
a width of the lug groove (51) gradually increases, without remaining constant, as it extends to the outer side in the tire width direction, from at least the inner end in the tire width direction of the lug groove (51) to the ground contact edge when moving straight (E),
an inner end (51a) in the tire width direction of the lug groove (51):
opens into the circumferential groove (31), or
is located on the outer side in the tire width direction of the circumferential groove (31) within the shoulder land portion (5),
**characterized in that**
a groove width of the lug groove (51) at the ground contact edge when moving straight (E) is at least twice a groove width of the lug groove (51) at the inner end (51a) in the tire width direction of the lug groove (51), and
wherein "ground contact edge when moving straight" refers to the edge in the tire width direction of the tread (8) when the tire (T01) is mounted on a rim that meets the WGI measurement conditions and is driven straight with load and internal pressure under the WGI measurement conditions, wherein the WGI measurement conditions refer to the test conditions for measuring the WGI as specified in "Supplementary Provision 5: Test procedure for measuring wet grip" of UN-R117-02-S08 and wherein the rim, load, and internal pressure under the WGI measurement conditions are described in "4.1.4. Tires and rims" in "Supplementary Provision 5: Test procedure for measuring wet grip" of UN-R117-02-508.

2. The tire (T01) as described in claim 1, wherein the lug groove (51) is configured so that it does not close within a tread surface (8) when in contact with a ground and has a groove width of 1.0 mm or more at the tread surface (8).

3. The tire (T01) as described in claim 1, wherein the lug groove (51) is connected to the circumferential groove (31).

4. The tire (T01) as described in claim 3, wherein at a connecting part between the lug groove (51) and the circumferential groove (31), a groove depth of the lug groove (51) is the same as a groove depth of the circumferential groove (31).

## Patentansprüche

1. Reifen (T01), wobei
ein Laufflächenabschnitt (T01t) auf mindestens einem halben Abschnitt des Reifens (T01) auf einer Seite relativ zur Reifenäquatorialebene (CL) mit Folgendem versehen ist:
einer umlaufenden Rille (31);
einem Schulterlandungsabschnitt (5), der bei gerader Bewegung (E) zwischen der umlaufenden Rille (31) und einer Bodenkontaktkante unterteilt ist; und
einer an dem Schulterlandungsabschnitt (5) vorgesehenen Stollenrille (51),
wobei die Stollenrille (51) an der Bodenkontaktkante bei geradliniger Bewegung (E) offen ist,
ein erster Neigungswinkel an einer spitzen Seite, θ1, relativ zu einer Reifenbreitenrichtung, einer ersten geraden Linie L1, die einen ersten Punkt Q1, der sich an der gleichen Position in Reifenbreite wie ein inneres Ende in der Reifenbreitenrichtung der Stollenrille (51) und auf einer Bodenkontaktlinie bei geradliniger Bewegung (AL) befindet, und einen zweiten Punkt Q2 verbindet, der sich an der Bodenkontaktkante bei geradliniger Bewegung (E) und auf der Bodenkontaktlinie bei geradliniger Bewegung (AL) befindet, größer als ein zweiter Neigungswinkel an einer spitzen Seite, θ2, relativ zur Reifenbreitenrichtung einer zweiten geraden Linie L2 ist, die einen dritten Punkt Q3, der sich an einem inneren Ende in der Reifenbreitenrichtung einer Rillenbreitenmittellinie (51m) der Stollenrille (51) befindet, und einen vierten Punkt Q4 verbindet, der sich an der Bodenkontaktkante bei geradliniger Bewegung (E) und auf der Rillenbreitenmittellinie (51m) der Stollenrille (51) befindet,
eine Breite der Stollenrille (51) schrittweise zunimmt, ohne konstant zu bleiben, während sie sich in der Reifenbreitenrichtung von mindestens dem inneren Ende der Stollenrille (51) zu der Bodenkontaktkante bei geradliniger Bewegung (E) nach außen erstreckt,
ein inneres Ende (51a) in der Reifenbreitenrichtung der Stollenrille (51):
in die umlaufende Rille (31) mündet, oder
sich auf der Außenseite in der Reifenbreitenrichtung der Umfangsrille (31) innerhalb des Schulterlandungsabschnitts (5) befindet,
**dadurch gekennzeichnet, dass**
eine Rillenbreite der Stollenrille (51) an der Bodenkontaktkante bei geradliniger Bewegung (E) mindestens das Doppelte einer Rillenbreite der Stollenrille (51) am inneren Ende (51a) in der Reifenbreitenrichtung der Stollenrille (51) beträgt, und wobei
"Bodenkontaktkante bei geradliniger Bewegung" die Kante in der Reifenbreitenrichtung der Lauffläche (8) bezeichnet, wenn der Reifen (T01) auf einer Felge montiert ist, die die WGI-Messbedingungen erfüllt, und unter Last und Innendruck unter den WGI-Messbedingungen geradeaus gefahren wird, wobei sich die WGI-Messbedingungen auf die in der "Ergänzungsbestimmung 5: Das Prüfverfahren zur Messung der Nassgriffigkeit" gemäß UN-R117-02-S08 festgelegten Prüfbedingungen zur WGI-Messung beziehen, und wobei die Felge, die Last und der Innendruck unter den WGI-Messbedingungen in "4.1.4. Reifen und Felgen" in "Ergänzungsbestimmung 5: Das Prüfverfahren zur Messung der Nassgriffigkeit" nach UN-R117-02-S08 beschrieben sind.

2. Reifen (T01) nach Anspruch 1, wobei die Stollenrille (51) so konfiguriert ist, dass sie sich beim Kontakt mit einem Boden nicht innerhalb einer Lauffläche (8) schließt und eine Rillenbreite von 1,0 mm oder mehr an der Lauffläche (8) aufweist.

3. Reifen (T01) nach Anspruch 1, wobei die Stollenrille (51) mit der Umfangsrille (31) verbunden ist.

4. Reifen (T01) nach Anspruch 3, wobei an einem Verbindungsstück zwischen der Stollenrille (51) und der Umfangsrille (31) eine Rillentiefe der Stollenrille (51) dieselbe wie eine Rillentiefe der Umfangsrille (31) ist.

## Revendications

1. Pneu (T01), dans lequel
une portion de bande de roulement (T01t) est munie, sur au moins une demi-portion du pneu (T01) d'un côté par rapport à un plan équatorial du pneu (CL), de :
une rainure circonférentielle (31) ;
une portion d'épaulement (5) divisée entre la rainure circonférentielle (31) et un bord de contact avec le sol lors d'un déplacement rectiligne (E) ; et
une rainure de patte (51) prévue sur la partie d'épaulement (5),
la rainure de patte (51) est ouverte au niveau du bord de contact avec le sol lors d'un déplacement en ligne droite (E),
un premier angle d'inclinaison au niveau d'un côté aigu, θ1, par rapport à la direction de la largeur du pneu, d'une première ligne droite L1, qui relie un premier point Q1 situé à la même position sur la largeur du pneu qu'une extrémité intérieure dans la direction de la largeur du pneu de la rainure de patte (51) et sur une ligne de contact avec le sol lors d'un déplacement en ligne droite (AL) et un deuxième point Q2 situé sur le bord de contact avec le sol lors d'un déplacement en ligne droite (E) et sur la ligne de contact avec le sol lors d'un déplacement en ligne droite (AL), est plus grand qu'un deuxième angle d'inclinaison au niveau d'un côté aigu, θ2, par rapport à la direction de la largeur du pneu, d'une deuxième ligne droite L2, qui relie un troisième point Q3 situé à une extrémité intérieure dans la direction de la largeur du pneu d'une ligne centrale de largeur de rainure (51m) de la rainure de patte (51) et un quatrième point Q4 situé sur le bord de contact avec le sol lors d'un déplacement en ligne droite (E) et sur la ligne centrale de largeur de rainure (51m) de la rainure de patte (51),
la largeur de la rainure de patte (51) augmente progressivement, sans rester constante, à mesure qu'elle s'étend vers l'extérieur dans la direction de la largeur du pneu, depuis au moins l'extrémité intérieure dans la direction de la largeur du pneu de la rainure de patte (51) jusqu'au bord de contact avec le sol lors d'un déplacement en ligne droite (E),
une extrémité intérieure (51a) dans la direction de la largeur du pneu de la rainure de patte (51) :
s'ouvre dans la rainure circonférentielle (31), ou
est située du côté extérieur dans la direction de la largeur du pneu de la rainure circonférentielle (31) à l'intérieur de la partie d'épaulement (5),
**caractérisé en ce que**
la largeur de rainure de la rainure de patte (51) au niveau du bord de contact avec le sol lors d'un déplacement en ligne droite (E) est au moins deux fois supérieure à la largeur de rainure de la rainure de patte (51) à son extrémité intérieure (51a) dans la direction de la largeur du pneu de la rainure de patte (51), et dans lequel
l'expression « bord de contact avec le sol lors d'un déplacement en ligne droite » désigne le bord de la bande de roulement (8) dans la direction de la largeur du pneu lorsque le pneu (T01) est monté sur une jante conforme aux conditions de mesure de WGI et qu'il est conduit en ligne droite avec une charge et pression interne, dans les conditions de mesure du WGI, dans lequel les conditions de mesure du WGI sont celles spécifiées dans les « Dispositions complémentaires 5 : Procédure d'essai pour la mesure de l'adhérence sur sol mouillé » du règlement UN-R117-02-S08, et dans lequel la jante, la charge et la pression interne dans les conditions de mesure de l'adhérence sur sol mouillé dans les conditions de mesure du WGI sont décrites au paragraphe « 4.1.4. Pneumatiques et jantes » des « Dispositions supplémentaires 5 : Procédure d'essai pour la mesure de l'adhérence en milieu humide » du règlement UN-R117-02-S08.

2. Pneu (T01) selon la revendication 1, dans lequel la rainure de patte (51) est configurée de manière à ne pas se fermer à l'intérieur d'une surface de bande de roulement (8) lorsqu'elle est en contact avec un sol et présente une largeur de rainure de 1,0 mm ou plus au niveau de la surface de bande de roulement (8).

3. Pneu (T01) selon la revendication 1, dans lequel la rainure de patte (51) est reliée à la rainure circonférentielle (31).

4. Pneu (T01) selon la revendication 3, dans lequel, au niveau d'une partie de liaison entre la rainure de patte (51) et la rainure circonférentielle (31), la profondeur de rainure de la rainure de patte (51) est la même que la profondeur de rainure de la rainure circonférentielle (31).
